# EUROPEAN PATENT APPLICATION

(11) **EP 3 992 913 A1**
(43) Date of publication of application: **04.05.2022**
(21) Application number: 20205337.7
(22) Date of filing: 03.11.2020
(51) Int. Cl.: G06T 11/00

(54) **MACHINE LEARNED MOTION ESTIMATION AND COMPENSATION IN CT IMAGES**

(71) Applicant: Koninklijke Philips N.V., 5656 AG Eindhoven (NL)
(72) Inventor: SCHMITT, Holger, 5656 AE Eindhoven (NL); LOSSAU, Tanja, 5656 AE Eindhoven (NL); GRASS, Michael, 5656 AE Eindhoven (NL)
(74) Representative: Philips Intellectual Property & Standards

(57) **Abstract**

Disclosed is a medical system (100) for processing computed tomography (CT) images (124, 132) comprising motion artifacts. The medical system (100) comprises a memory (110) storing machine executable instructions (120) and a machine learning framework (122) trained to receive a CT image (124, 132) comprising a motion artifact as an input and to provide one or more estimated motion vectors (128) of a motion causing the motion artifact in response as an output. The medical system (100) further comprises a processor (106) for controlling the medical system (100). Execution of the machine executable instructions (120) by the processor (106) causes the processor (106) to control the medical system (100) to receive an initial CT image (124) comprising an initial motion artifact and CT raw projection data (126) used for reconstructing the initial CT image (124), to determine an estimated motion vector field (128) of the motion causing the initial motion artifact using the output of the trained machine learning framework (122) in response to receiving the initial CT image (124) as input, and to reconstruct a motion corrected CT image (132) using the CT raw projection data (126) and the estimated motion vector field (128).

## Description

### TECHNICAL FIELD

The invention relates to Computed Tomography (CT), in particular to motion estimation and compensation in CT using machine learning.

### BACKGROUND OF THE INVENTION

In CT X-ray measurements are taken from a variety of angles and used to reconstruct a tomographic image. The attenuation of the X-rays by different body structures and tissue types is dependent upon the energy of the X-rays.

Motion during CT data acquisition frequently result in artifacts in CT images reconstructed using the acquired CT data. Such artifacts may, e.g., comprise intensity undershoots and blurring. Artifacts in the CT images reduce the image quality and may limit an evaluation of the respective image or even cause misinterpretations of the respective image. Especially, CT images of the lung due to breathing motion or CT images of the heart due to cardiac motion are susceptible to such motion artifacts.

### SUMMARY OF THE INVENTION

The invention provides for a medical system, a method for operating a medical system, and a computer program comprising machine executable instructions for execution by a medical system in the independent claims. Embodiments are given in the dependent claims.

In one aspect the invention provides for a medical system for processing CT images comprising motion artifacts. The medical system comprises a memory storing machine executable instructions and a machine learning framework trained to receive a CT image comprising a motion artifact as an input and to provide one or more estimated motion vectors of a motion causing the motion artifact in response as an output. The medical system further comprises a processor for controlling the medical system.

Execution of the machine executable instructions by the processor causes the processor to control the medical system to receive an initial CT image comprising an initial motion artifact and CT raw projection data used for reconstructing the initial CT image, to determine an estimated motion vector field of the motion causing the initial motion artifact using the output of the trained machine learning framework in response to receiving the initial CT image as input, and to reconstruct a motion corrected CT image using the CT raw projection data and the estimated motion vector field.

Such a medical system may have the advantage of using machine learning for estimating and compensating motion artifacts in a CT image based on an artifact appearance analysis of the respective CT image.

The motion estimation, more precisely the motion vector estimation, in the CT image based on the artifact appearance analysis is used for a subsequent motion compensated reconstruction of the CT image. The artifact appearance analysis takes advantage of characteristic patterns in which motion artifacts may manifest. The characteristic patterns may depend on the relation of the motion direction and the angular reconstruction range used for reconstructing the CT image. Examples may exploit these varying artifact appearances by estimating underlying motion vectors directly, e.g., from a single reconstructed CT image.

For example, the angular reconstruction range used for reconstructing the initial CT image may be used as an additional input in the trained machine learning framework. The machine learning framework may be trained to provide one or more estimated motion vectors depending on the initial CT image and a definition of the angular reconstruction range used for reconstructing the respective initial CT image.

For example, the direction of the estimated motion vectors may be defined relative to the gantry angle, e.g. mean gantry angle.

Such an artifact appearance-based approach may have the advantage of enabling an estimation of motion vectors without requiring an extended temporal scan range. In contrast, known motion compensation approaches deal a with motion estimation based on 3D registration of multiple motion states. Acquiring CT raw projection data of multiple motion states requires an extended temporal scan range and therefore corresponds to an increased radiation dose. Embodiments may have the advantage of enabling a reduction of motion artifacts without requiring an extended temporal scan range. For estimating one or more motion vectors, a single CT image may be enough. A minimal temporal range required for a single CT image may have the advantage of corresponding to a small radiation dose compared to radiation doses of aforementioned approaches based on 3D registration of multiple motion states.

Thus, examples may have the advantage of providing CT images with improved image quality, i.e. reduced levels of motion artifacts, as well as reduced radiation doses.

For the motion estimation step, the method may require no raw data at all. Therefore, the motion estimation model provided in form of the trained machine learning framework may furthermore be used to determine typical motion patterns, e.g., for motion model development, on large sets of reconstructed CT images. Estimated motion vectors may, e.g., further be used for functional analysis.

An estimated motion vector received as output from the trained machine learning framework may, e.g., be a predominant motion vector of a motion pattern comprised by the CT image. In case different motion patterns may be visible in a single CT image, multiple motion vectors may be estimated per image. Different versions of the motion corrected CT image may be reconstructed using a different one of the multiple motion vectors for each of the versions. All the different versions of the motion corrected CT image may be displayed an/or may be selectable to be displayed.

Different motion patterns may, e.g., be visible in case of branching vessels as comprised by axial patches in coronary CT angiography images. A significant reduction of artifact levels, e.g. in coronary CT angiography images may be achieved. Beside motion compensation at the coronary arteries, the method may be extendable to arbitrary parts of the human anatomy and may enable, e.g., an organ-specific training of the motion estimation model. Motion-perturbed regions, i.e., regions where the method should be applied, may for example be either identified by fully automatic quality measures or by visual inspection based on user interaction.

In case of different motion patterns, e.g., at a coronary cross-section, a plurality of motion vectors may be predicted and, e.g., finally averaged. For predicting the plurality of motion vectors, a trained machine learning framework comprising a plurality of sub-frameworks may be used. The plurality of sub-frameworks may, e.g., be provided in form of an ensemble comprising a plurality of convolutional neural networks each estimating a motion vector for another one of the different motion patterns.

For example, a single motion vector is estimated. The machine learning framework may be trained to receive a CT image as an input and to provide a single estimated motion vector in response as an output.

For example, the trained machine learning framework provides the estimated motion vector field as output in response to the receiving of the initial CT image as input. For example, a plurality of motion vectors is estimated, e.g., a motion vector per voxel. Thus, a motion vector field may be estimated. The machine learning framework may be trained to receive a CT image as an input and to provide an estimated motion vector per voxel, e.g., the estimated motion vector field in response as an output. The motion vector field may be used for reconstructing the motion corrected CT image, i.e., for generating motion corrected CT image data.

For example, the estimated motion vector field comprises an estimated motion vector for each voxel of the initial CT image. For example, the estimated vector field comprises an estimated motion vector for each voxel of the motion corrected CT image to be reconstructed.

For example, the trained machine learning framework provides one or more estimated motion vector of the estimated motion vector field, which are used for determining, i.e., calculating the estimated motion vector field. For example, the estimated motion vector field is calculated using an extrapolation and/or an interpolation.

For example, the reconstruction of the motion corrected CT image comprises spatially correcting line integrals used for the reconstruction according to the estimated motion vector field.

For example, a motion compensated filtered back-projection is used for reconstructing the motion corrected CT image. A motion correction may be applied during a back-projection step shifting the voxels of the CT raw projection data to be reconstructed according to the estimated motion vector or motion vector field. Such a filtered back-projection for motion compensated is for example described in D. Schaefer, J. Borgert, V. Rasche, and M. Grass, "Motion-compensated and gated cone beam filtered back-projection for 3-D rotational X-ray angiography," IEEE Trans. Med. Imaging 25, 898-906, 2006.

For example, a plurality of initial CT images, each comprising an initial motion artifact, and CT raw projection data used for reconstructing the initial CT images are received. Each of the initial CT images of the plurality of initial CT images is provided to the trained machine learning framework as input. The output provided by the trained machine learning framework in response to each of the initial CT images of the plurality of initial CT images in combination is used for the determining of the estimated motion vector field. Thus, the estimated motion vector field may depend on estimated motion vectors received as output from the trained machine learning framework for different initial CT images. The plurality of initial CT images provided to the trained machine learning framework as input may, e.g., be neighboring slices through a field of view. A full global motion artifact reduction may be enabled. A global motion artifact reduction may be executed automatically, e.g. all initial CT images of the plurality of initial CT images may be used.

For example, a single initial CT image comprising an initial motion artifact and CT raw projection data used for reconstructing the single initial CT image are received. For example, the estimated motion vector field of the motion causing the initial motion artifact is determined using the output of the trained machine learning framework in response to receiving the single initial CT image as input. A single motion corrected CT image is reconstructed using the CT raw projection data and the estimated motion vector field. Thus, the trained machine learning framework may be applied on a local region of interest. A local motion artifact reduction may be enabled. A point of interest for which the local motion artifact reduction is to be executed may, e.g., be selected automatically or manually, e.g., by a user.

For example, the determining of estimated motion vectors and the reconstructing of motion corrected CT images is performed iteratively. The iterative performance may comprise
determining a current estimated motion vector field of a current iterative step n with n ≥ 2 using the output of the trained machine learning framework in response to receiving a motion corrected CT image of a preceding iterative step n-1. A current motion corrected CT image of the current iterative step n may be reconstructed using the CT raw projection data and a combination of the estimated motion vector field used for reconstructing the motion corrected CT image of the preceding iterative step n-1 with the current estimated motion vector field of the current iterative step n.

For example, the current estimated motion vector field of the current iterative step n is added to the estimated motion vector field used for reconstructing the motion corrected CT image of the preceding iterative step n-1. The estimated motion vector field used for reconstructing the motion corrected CT image of the preceding iterative step n-1 may comprise a combination of the estimated motion vector fields of each of the n-1 preceding iterative steps. For example, each of the estimated motion vector fields determined in the n-1 preceding iterative steps are added.

An iterative approach may have the advantage of improving the result, i.e., the quality of the reconstructed CT image with each iterative step. Once an underlying motion vector field is determined, a motion compensated image volume may be reconstructed, e.g., by motion compensated filtered back-projection. The method may be applied in an iterative fashion. After each estimation and motion corrected reconstruction, a new loop may be started.

For example, the trained machine learning framework provides the estimated current motion vector field as output in response to the receiving of the current CT image as input. For example, a plurality of current motion vectors is estimated, e.g., a current motion vector per voxel. Thus, the current motion vector field may be estimated. The machine learning framework may be trained to receive a current CT image as an input and to provide a current estimated motion vector per voxel, e.g., the current estimated motion vector field in response as an output. The motion vector field may be used for reconstructing the current motion corrected CT image, i.e., for generating current motion corrected CT image data.

For example, the iteration is terminated, when a predefined maximum number nₘₐₓ ≥ 2 of iterative steps performed is reached or when each of the current estimated motion vectors comprised by the output of the trained machine learning framework subceed a predefined threshold. Since no convergence can be proven, the method may be stopped after a fixed number of iterative steps or if no non-zero motion vectors are estimated anymore, i.e., no motion vectors exceeding the predefined threshold.

For example, the machine learning framework comprises a regression model. For example, the machine learning framework comprises a convolutional neural network.

For example, the initial CT image comprising the initial motion artifact is a CT image of a specific organ and the CT raw projection data is CT raw projection data of the specific organ. The trained machine learning framework is trained organ specific to receive the initial CT image of the specific organ comprising the motion artifact as an input and to provide the one or more estimated motion vectors of the motion of the specific organ causing the motion artifact in response as an output. Examples may be optimized to estimate motion vectors of motions typical for specific organs.

For example, the initial CT image comprising the initial motion artifact is a CT image of a specific organ and the CT raw projection data is CT raw projection data of the specific organ. For example, the trained machine learning framework comprises a plurality of trained sub-frameworks, wherein each of the trained sub-frameworks is trained organ specific to receive a CT image of a sub-framework specific organ comprising an initial motion artifact as an input and to provide one or more estimated motion vectors of a motion of the respective sub-framework specific organ causing the initial motion artifact in response as an output. For example, the initial CT image is assigned to the specific organ of which it is a CT image. For example, the CT raw projection data are assigned to a specific organ of which they are CT raw projection data.

A trained sub-framework of the plurality of trained sub-frameworks of the trained machine learning framework may be selected. The selected trained sub-framework may be trained for the specific organ to which the initial CT image and the CT raw projection data are assigned. The initial CT image used as input to the trained machine learning framework may be received and processed by the selected trained sub-framework of the trained machine learning framework. Examples may have the advantage of providing different sub-frameworks optimized to estimate motion vectors or motion vector fields of motions typical for different organs. Thus, for a specific organ, the organ specific sub-framework may be selected in order to ensure motion vectors estimation optimized for motions typical for said specific organ.

Each sub-framework may, e.g., be provided by an individual regression model, e.g., an individual convolutional network.

The specific organ for which the machine learning framework or one of the sub-frameworks of the plurality of sub-frameworks is trained may, e.g., be the lung or the heart. The estimated motion vector may, e.g., be a motion vector of a breathing motion or a cardiac motion, respectively. The initial CT image may, e.g., be an image of the lung or an image of the heart, respectively.

The initial CT image may, e.g., be a CT angiography image visualizing arterial and/or venous vessels of a patient. For example, the initial CT image may be a coronary CT angiography image which may be used to assess coronary arteries of the heart.

For example, execution of the machine executable instructions further causes the processor to control the medical system to provide the trained machine learning framework using an untrained machine learning framework, which is trained using training data. The training data comprise a plurality of training CT images with motion artifacts. Each training CT image is assigned with one or more training motion vectors of a motion causing the motion artifact of the respective training CT image. The training comprises generating the trained machine learning framework by training the untrained machine learning framework to receive the training CT images as a training input and to provide the one or more training motion vectors assigned to the received training CT image in response as a training output.

The machine executable instructions may, e.g., implement a supervised learning of the untrained machine learning framework subsequent to the providing of the training data.

For example, each training CT image is assigned with a single motion vector.

For example, the machine learning framework trained is to provide an estimated motion vector field as output in response to the receiving of a CT image as input. For example, each training CT image is assigned with a plurality of motion vectors, e.g., a motion vector per voxel. Thus, the machine learning framework may be trained to receive a CT image as an input and to provide an estimated motion vector per voxel, e.g., the estimated motion vector field in response as an output. The motion vector field may be used for reconstructing the motion corrected CT image, i.e., for generating motion corrected CT image data.

For example, each training CT image may further be assigned with a definition of an angular reconstruction range used for reconstructing the respective initial CT image. This definition of the angular reconstruction range used for reconstructing the training CT image may be used as an additional input into the machine learning framework. The artifact appearance analysis may take advantage of characteristic patterns in which motion artifacts may manifest. These characteristic patterns may depend on the relation of the motion direction and the angular reconstruction range used for reconstructing the CT image. In order to exploit these varying artifact appearances for estimating underlying motion vectors, the machine learning framework may be trained to provide one or more estimated motion vector as output depending on the CT image and the definition of the angular reconstruction range used for reconstructing the respective CT image provided as input.

For example, the plurality of training CT images comprises clinical CT images with motion artifacts for which the one or more training motion vectors of the motion causing the motion artifact is known. The clinical CT images may be used which comprise motion artifacts. Motion vector or motion vector field predictions may be generated using known motion compensation approaches and assigned to the respective clinical CT images. In particular, such motion compensation approaches may be used which are known to significantly reduce artifact levels.

For example, training CT images reconstructed using motion artifact free CT raw data and a synthetic motion vector field introducing a synthetic motion artifact with one or more known training motion vectors into the respective reconstructed training CT image.

For example, the training data may form a database providing a link between artifact features, in particular features of the visual appearance the artifacts, and the underlying motion trajectories of the motions causing the respective artifact features.

The training data may be used for training the machine learning framework, e.g., provided by a regression model like a convolutional neural network, which takes a motion-perturbed CT image as input and provides one or more underlying motion vector as output.

For example, the training is an organ specific training using training data with training CT images of the respective organ for which the untrained machine learning framework is trained specifically.

For example, the training is an organ specific training using training data with training CT images of the respective organ for which an untrained sub-framework of a plurality of sub-frameworks of the untrained machine learning framework is trained specifically.

For example, the medical system further comprises a CT system configured for acquiring the CT raw projection data. The receiving of the CT raw projection comprises acquiring the CT raw projection data using the CT system. The receiving of the initial CT image comprises reconstructing the initial CT image using the CT raw projection data acquired with the CT system.

For example, an initial CT image may be reconstructed and displayed. The initial CT image may be used to subsequently generate and display a motion corrected CT image.

For example, an angular scan range used for acquiring the CT raw projection data is an angular scan range of 180° plus a fan angle. Examples may require only a minimal angular scan range of 180° plus a fan angle and thus may allow for motion compensated reconstruction using short-scan data. The rotation of the gantry for acquiring X-ray measurements different directions may, e.g., be limited to 180°. The fan angle quantifies the fanning out of the X-ray beams with a fan geometry used for the scan. For example, an angular scan range used for acquiring the CT raw projection data is an angular scan range from 180° plus a fan angle to 240° plus fan angle. For example, an angular scan range used for acquiring the CT raw projection data is an angular scan range from 180° plus a fan angle to 260° plus fan angle. For example, an angular scan range used for acquiring the CT raw projection data is an angular scan range from 180° plus a fan angle to 280° plus fan angle. For example, an angular scan range used for acquiring the CT raw projection data is an angular scan range from 180° plus a fan angle to 300° plus fan angle.

In another aspect the invention provides for a method of operating a medical system for processing CT images comprising motion artifacts. The medical system comprises a memory storing machine executable instructions and a machine learning framework trained to receive a CT image comprising a motion artifact as an input and to provide one or more estimated motion vectors of a motion causing the motion artifact in response as an output. The medical system further comprises a processor for controlling the medical system.

Execution of the machine executable instructions by the processor causes the processor to perform the method, which comprises receiving an initial CT image comprising an initial motion artifact and CT raw projection data used for reconstructing the initial CT image, determining an estimated motion vector field of the motion causing the initial motion artifact using the output of the trained machine learning framework in response to receiving the initial CT image as input, and reconstructing a motion corrected CT image using the CT raw projection data and the estimated motion vector field.

Such a method may have the advantage of using machine learning for estimating and compensating motion artifacts in a CT image based an artifact appearance analysis of the respective CT image.

Examples of the method may be configured to control each of the aforementioned examples of the medical system. For example, the method may further comprise controlling a CT system comprised by the medical system to acquire the CT raw projection data and to reconstruct the initial CT image using the acquired CT raw projection data.

For example, the method further comprises providing the trained machine learning framework using an untrained machine learning framework, which is trained using training data. The training data may comprise a plurality of training CT images with motion artifacts. Each training CT image may be assigned with one or more training motion vectors of a motion causing the motion artifact of the respective training CT image. The training may comprise generating the trained machine learning framework by training the untrained machine learning framework to receive the training CT images as a training input and to provide the one or more training motion vectors assigned to the received training CT image in response as a training output.

In another aspect the invention provides for a computer program comprising machine executable instructions for processing CT images comprising motion artifacts. The machine executable instructions are configured to be executed by a medical system comprising a memory storing a machine learning framework trained to receive a CT image comprising a motion artifact as an input and to provide one or more estimated motion vectors of a motion causing the motion artifact in response as an output. The medical system further comprises a processor controlling the medical system.

The execution of the machine executable instructions by the processor causes the processor to control the medical system receive an initial CT image comprising an initial motion artifact and CT raw projection data used for reconstructing the initial CT image, to determine an estimated motion vector field of the motion causing the initial motion artifact using the output of the trained machine learning framework in response to receiving the initial CT image as input, and to reconstruct a motion corrected CT image using the CT raw projection data and the estimated motion vector field.

Such a computer program may have the advantage of using machine learning for estimating and compensating motion artifacts in a CT image based an artifact appearance analysis of the respective CT image.

Examples of the machine executable instructions of the computer program may be configured to control each of the aforementioned examples of the medical system. For example, the execution of the machine executable instructions may further cause the processor to control a CT system comprised by the medical system to acquire the CT raw projection data and to reconstruct the initial CT image using the acquired CT raw projection data.

For example, the execution of the machine executable instructions further causes the processor to control the medical system to provide the trained machine learning framework using an untrained machine learning framework, which is trained using training data. The training data may comprise a plurality of training CT images with motion artifacts. Each training CT image is assigned with one or more training motion vectors of a motion causing the motion artifact of the respective training CT image. The training comprises generating the trained machine learning framework by training the untrained machine learning framework to receive the training CT images as a training input and to provide the one or more training motion vector assigned to the received training CT image in response as a training output.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, a data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments, computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the processor of a computer system to interact with and/or control an external computing device and/or apparatus. A hardware interface may allow a processor to send control signals or instructions to an external computing device and/or apparatus. A hardware interface may also enable a processor to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

The term 'machine learning' (ML) refers to a computer algorithm used to extract useful information from training data sets by building probabilistic frameworks, referred to as machine learning frameworks (also referred to as machine learning models), in an automated way. The machine learning may be performed using one or more learning algorithms such as linear regression, K-means, classification algorithm, reinforcement algorithm etc. A 'machine learning framework' may for example be an equation or set of rules that makes it possible to predict an unmeasured value from other, known values.

'Neural networks' as used herein encompasses are computing systems configured to learn, i.e. progressively improve their ability, to do tasks by considering examples, generally without task-specific programming. A neural network comprises a plurality of units referred to as neurons which are communicatively connected by connections for transmitting signals between connected neurons. The connections between neurons are referred to as synapses. Neurons receive a signal as input, change their internal state, i.e. the activation, according to the input. Depending on the input, the learned weights and bias an activation is generated as output and sent via one or more synapses to one or more connected neurons. The network forms a directed and weighted graph, where the neurons are the nodes and the connection between the neurons are weighted directed edges. The weights and biases may be modified by a process called learning, which is governed by a learning rule. The learning rule is an algorithm which modifies the parameters of the neural network, in order for a given input to the network to produce a favored output. This learning process may amount to modifying the weights and biases of the network.

The neurons are organized in layers. Different layers may perform different types of transformations on their inputs. Signals applied to a neuronal network travel from a first layer, i.e. the input layer, to the last layer, i.e. output layer, traversing intermediate (hidden) layers arranged between input and output layer.

'Network parameters' as used herein encompass weights and biases of the neurons which may be varied as learning proceeds and which may increase or decrease the strength of signals that are sends downstream by the neurons via the synapses.

A 'convolutional neural network' refers to a neural network comprising one or more convolutional layers. Convolutional layers apply a convolution operation to the input, passing the result to the next layer. Furthermore, convolutional layer may share weights, i.e. all weights of a convolutional layer may be identical.

Computed Tomography (CT) raw projection data is defined herein as being the recorded X-ray measurements performed by a CT system. CT raw projection data may be reconstructed by a computer into one or more tomographic images, i.e., CT image, which can be visualized using a computer. A CT may be a 2D or a 3D image, i.e., may comprise 2D or 3D CT image data.

### BRIEF DESCRIPTION OF THE DRAWINGS

In the following preferred embodiments of the invention will be described, by way of example only, and with reference to the drawings in which:
Fig. 1 illustrates an example of a medical system;
Fig. 2 shows a flow chart illustrating an exemplary method of operating the medical system of Fig. 1;
Fig. 3 shows a flow chart illustrating an exemplary method of operating the medical system of Fig. 1;
Fig. 4 shows a flow chart illustrating an exemplary method of operating the medical system of Fig. 1;
Fig. 5 illustrates an example of a medical system comprising a CT system;
Fig. 6 illustrates an example of a gantry of a CT system;
Fig. 7 shows a flow chart illustrating an exemplary method of operating the medical system of Fig. 5;
Fig. 8 shows a flow chart illustrating an exemplary method of training a machine learning framework;
Fig. 9 illustrates the training of an exemplary machine learning framework;
Fig. 10 illustrates the use of the exemplary trained machine learning framework of Fig. 9;
Fig. 11 illustrates an exemplary generating of training data;
Fig. 12 illustrates an exemplary motion vector estimating and motion correcting;
Fig. 13 shows an exemplary CT image with estimated motion vectors from Fig. 12; and
Fig. 14 show exemplary cardiac CT images before and after motion correction.

### DETAILED DESCRIPTION OF THE EMBODIMENTS

Like numbered elements in these figures are either equivalent elements or perform the same function. Elements which have been discussed previously will not necessarily be discussed in later figures if the function is equivalent.

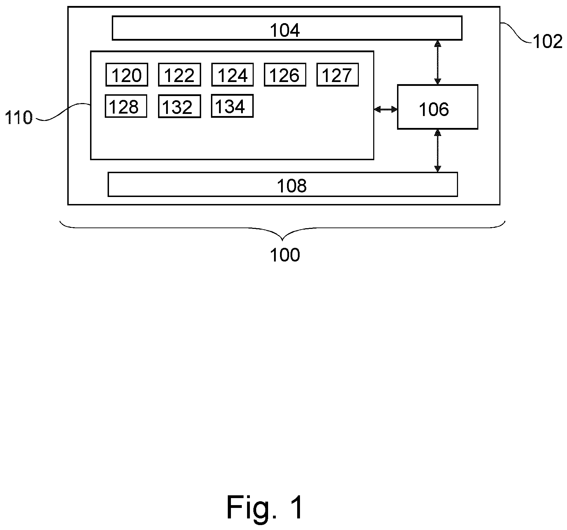

Fig. 1 illustrates an example of a medical system 100. In this example the medical system 100 comprises a computer 102. The medical system 100 further comprises a hardware interface 104 that is connected to a computational system 106. The computational system 106 is intended to represent one or more processors or other computational systems that may be located at one or more locations. The hardware interface 104, if present, may be used for controlling other components of the medical system 100. For example, if the medical system 100 includes a CT system. Furthermore, data to be processes by the computational system 106, e.g., CT raw projection data acquired using the CT system, may be received via the hardware interface 104. Acquired CT raw projection data may, e.g., be received from the CT system acquiring the respective CT raw projection data or from a database in which the CT raw projection data acquired by the CT system is stored. Such a database may, e.g., be a local database comprised by the medical system 100 or a remote database accessible via a network, like an intranet or the Internet. The computational system 106 is further shown as being connected to a user interface 108 and a memory 110. The memory 110 is intended to represent any type of memory that may be connected or accessible to the computational system 106.

The memory 110 is shown as containing machine-executable instructions 120. The machine-executable instructions 120 enable the computational system 106 to control other components of the medical system 100 via the hardware interface 104. The machine-executable instructions 120 may also enable the computational system 106 to perform various data processing and image processing tasks. The memory 110 is further shown as containing a trained machine learning framework 122, e.g., a regression model like a neural network. In case of a neural network, the neural network may, e.g., be a convolutional neural network. For example, the machine learning framework 122 may comprise a plurality of sub-frameworks, like a plurality of regression model, e.g., in the form of neural network. In case of a plurality of neural networks, the respective neural networks may, e.g., be provided in the form of convolutional neural networks. The machine learning framework 122 may have been trained so that it receives a CT image comprising a motion artifact as an input and outputs one or more estimated motion vectors of a motion causing the respective motion artifact. For example, the machine learning framework 122 may be trained to output a single estimated motion vector. For example, the machine learning framework 122 may be trained to output a motion vector field.

The memory 110 is further shown as containing one or more initial CT images 124 and CT raw projection data 126 used for reconstructing the initial CT image 124. The initial CT images may be reconstructed by the computational system 106 using the CT raw projection data 126, e.g., received via the hardware interface 104. Alternatively, the initial CT images 124 may be received together with the CT raw projection data 124 via the hardware interface 104. The machine-executable instructions 120 may, e.g., enable the computational system 106 to determine an estimated motion vector field 128 for each of the initial CT images 124 using the respective initial CT images 124 as input to the trained machine learning framework 122. The trained machine learning framework 122 may provide the estimated motion vector field 128 as an output. Alternatively, the trained machine learning framework 122 may provide one or more estimated motion vectors 127 of the estimated motion vector field 128 as output. The one or more estimated motion vectors 127 provided by the trained machine learning framework 122 may be used to calculate the estimated motion vector field 128. For example, the estimated motion vector field 128 may be extrapolated and/or interpolated using the one or more estimated motion vectors 127 provided by the trained machine learning framework 122. Furthermore, the machine-executable instructions 120 may enable the computational system 106 to reconstruct one or more motion corrected CT images 132 for each of the initial CT images 124 using the CT raw projection data 126 and the estimated motion vector field 128 determined for the respective initial CT image 124.

The determining of estimated motion vector field and the reconstructing of motion corrected CT images may be performed iteratively. The iteration may comprise two or more iterative steps. The initial first step of the iteration may comprise the determining of the estimated motion vector field 128 for the initial CT image 124 using the respective initial CT image 124 as input to the trained machine learning framework 122 and reconstructing the motion corrected CT images 132 using CT raw projection data 126 and the estimated motion vector field 128. In each of the subsequent iterative steps n ≥ 2, a current estimated motion vector field of the current iterative step n may be determined using a motion corrected CT image resulting from a preceding iterative step n-1. The motion corrected CT image resulting from the preceding iterative step n-1 may be provided as input to the trained machine learning framework 122. The trained machine learning framework 122 may provide one or more current estimated motion vector for determining the current estimated motion vector field or the current estimated motion vector field itself as output. A current motion corrected CT image of the current iterative step n may be reconstructed using the CT raw projection data and a combination of the estimated motion vector field used for reconstructing the motion corrected CT image of the preceding iterative step n-1 with the current estimated motion vector field of the current iterative step n. For example, the current estimated motion vector field of the current iterative step n is added the estimated motion vector field used for reconstructing the motion corrected CT image of the preceding iterative step n-1. The estimated motion vector field used for reconstructing the motion corrected CT image of the preceding iterative step n-1 comprises a combination of the estimated motion vector fields of each of the n-1 preceding iterative steps. For example, each of the estimated motion vector fields determined in the n-1 preceding iterative steps are added. The iteration may be continued until at least termination criterion is satisfied. For example, a plurality of termination criteria may be used. A first termination may be satisfied, when a predefined maximum number nₘₐₓ ≥ 2 of iterative steps is performed. A second termination criterion may be satisfied, if each of the current estimated motion vectors comprised by the output of the trained machine learning framework 122 subceed a predefined threshold.

The memory 110 is further shown as containing training data 134 for training an untrained machine learning framework in order to generate the trained machine learning framework 122. The machine-executable instructions 120 may enable the computational system 106 to train an untrained machine learning framework using the training data 134. The training data 134 may comprise a plurality of training CT images with motion artifacts. Each training CT image of the training data 134 is assigned with one or more training motion vectors of a motion causing the motion artifact of the respective training CT image. The training CT images may comprise clinical CT images with motion artifacts for which the training motion vector of the motion causing the motion artifact is known. Furthermore or alternatively, synthetic motion artifacts with known training motion vectors may be introduced by reconstructing training CT images using artifact free CT raw projection data and a synthetic motion vector field with one or more of the known training motion vectors. For example, the training data 134 may further comprise training CT images without motion artifacts assigned with one or more zero training motion vectors.

The training using the training data 134 may generate the trained machine learning framework 122 by training the untrained machine learning framework to receive the training CT images of the training data 134 as a training input and to provide the one or more training motion vectors assigned to the received training CT image of the training data 134 in response as a training output. The training may be an organ specific training using training data 134 with training CT images of the respective organ for which the untrained machine learning framework is to be trained. The untrained sub-framework may, e.g., comprise a plurality of sub-frameworks. The individual untrained sub-frameworks may be provided in form of individual untrained regression models. The untrained sub-frameworks may each be trained for a specific organ using training data 134 with training CT images of that specific organ.

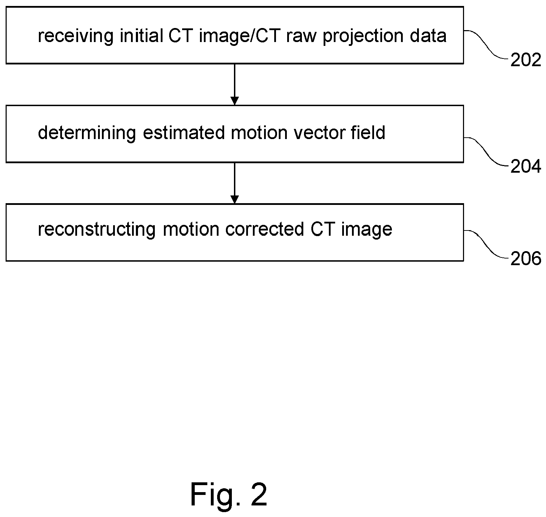

Fig. 2 shows a flow chart illustrating an exemplary method of operating the medical system of Fig. 1. In block 202, an initial CT image is received. Furthermore, CT raw projection data used for reconstructing the initial CT image is received. The initial CT image may be received in form of a reconstructed CT image or the receiving may comprise reconstructing the respective initial CT image using the received CT raw projection data. In block 204, an estimated motion vector field is determined using the initial CT image as input to a trained machine learning framework. For example, a regression model, like a convolutional neural network, may be used as a machine learning framework. The machine learning framework may be trained to receive a CT image comprising a motion artifact as an input and in response to provide one or more estimated motion vectors of a motion causing the motion artifact as an output. For example, the trained machine learning framework may provide the estimated motion vector as output in response to receiving the initial CT image as input. The one or more estimated motion vectors provided by the trained machine learning framework may be used for calculating the estimated motion vector field. Alternatively, the machine learning framework may be trained to provide the estimated motion vector field itself as output. In block 206, a motion corrected CT image is reconstructed, e.g., using a motion compensated filtered back-projection. For the reconstruction of the motion corrected CT image the received CT raw projection data and the estimated motion vector field may be used.

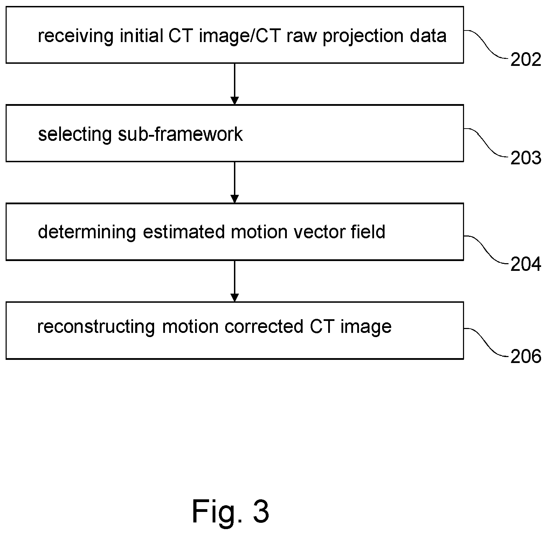

Fig. 3 shows a flow chart illustrating another exemplary method of operating the medical system of Fig. 1. The trained machine learning framework may comprise a plurality of sub-frameworks. For example, the machine learning framework may comprise a plurality of regression models, e.g. convolutional neural networks, each of which is a sub-framework trained for a specific organ. In block 202, the initial CT image and the CT raw projection data may be received as in Fig. 2. In addition, the initial CT image and the CT raw projection data may be assigned to a specific organ, i.e. the initial CT image may be an image of the respective organ. The CT raw projection data may be projection data resulting from X-ray measurements of the specific organ. In block 203, a trained sub-framework of the plurality of trained sub-frameworks is selected, which is trained for the specific organ to which the initial CT image and the CT raw projection data are assigned. In block 204, an estimated motion vector field is determined using the selected sub-framework of the trained machine learning framework. The initial CT image may be provided as input to the selected sub-framework and the resulting output may provide the estimated motion vector field or may be used for the determining of the estimated motion vector field. In block 206, a motion corrected CT image is reconstructed, e.g., using a motion compensated filtered back-projection. For the reconstruction of the motion corrected CT image using the CT raw projection data and the estimated motion vector field may be used.

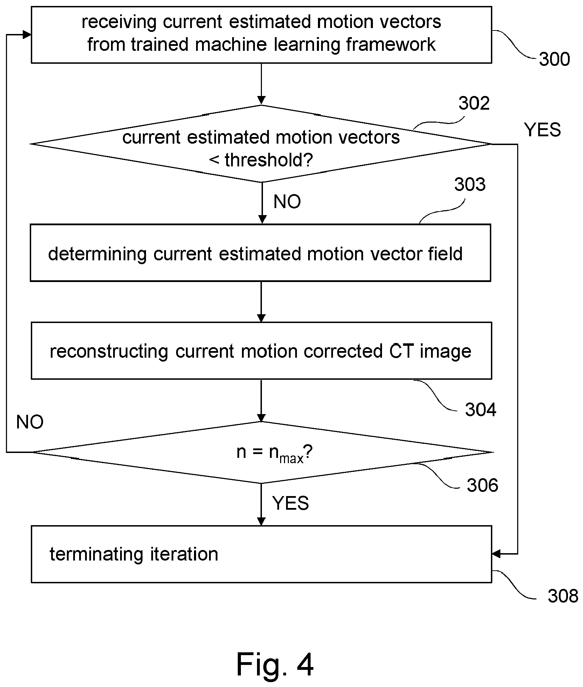

Fig. 4 shows a flow chart illustrating an exemplary method of operating the medical system of Fig. 1. An iteration is used to determine estimated motion vector fields and to reconstruct motion corrected CT images. The iteration may comprise two or more iterative steps. The initial first step of the iteration may, e.g., comprise the determining of an estimated motion vector field for the initial CT image and the reconstructing the motion corrected CT images of Fig.2 or 3. Each of the subsequent iterative steps n ≥ 2 may begin with block 300. In block 300 one or more current estimated motion vectors of a current iterative step n may be received from the trained machine learning framework in response to providing a motion corrected CT image resulting from a preceding iterative step n-1 as input to the trained machine learning framework. The one or more estimated motion vectors may be received as an output. In block 302, a first termination criterion may be checked. It may be checked, whether the each of the current estimated motion vectors comprised by the output of the trained machine learning framework subceed a predefined threshold. If this is the case, i.e., if the length, i.e., absolute value of each of the current estimated motion vectors comprised by the output of the trained machine learning framework subceed the predefined threshold, the iteration may be terminated in block 308. In case one or more of the estimated motion vectors exceed the threshold, the iteration may be continued in block 303. In block 303, a current estimated motion vector field is determined. The current estimated motion vector field may be determined using the one or more current estimated motion vectors received from the trained machine learning framework in block 300, e.g., using extrapolation and/or interpolation. Alternatively, the determining of current estimated motion vector field may be part of block 300 with the trained machine learning framework providing the current estimated motion vector field itself as output. In block 304, a current motion corrected CT image of the current iterative step n may be reconstructed. For the reconstruction, the CT raw projection data and a combination of the estimated motion vector field used for reconstructing the motion corrected CT image of the preceding iterative step n-1 with the current estimated motion vector field of the current iterative step n determined in block 303 may be used. For example, the current estimated motion vector field of the current iterative step n is added the estimated motion vector field used for reconstructing the motion corrected CT image of the preceding iterative step n-1. The estimated motion vector field used for reconstructing the motion corrected CT image of the preceding iterative step n-1 comprises a combination of the estimated motion vector fields of each of the n-1 preceding iterative steps. For example, each of the estimated motion vector fields determined in the n-1 preceding iterative steps are added.

In block 306, a second termination criterion may be checked. It may be checked, whether a predefined maximum number nₘₐₓ ≥ 2 of iterative steps is performed, i.e. whether n = nₘₐₓ. In case n = nₘₐₓ, the iteration may be terminated in block 308. In case n < nₘₐₓ, the iteration may be continued in block 300 with the next iterative step n + 1.

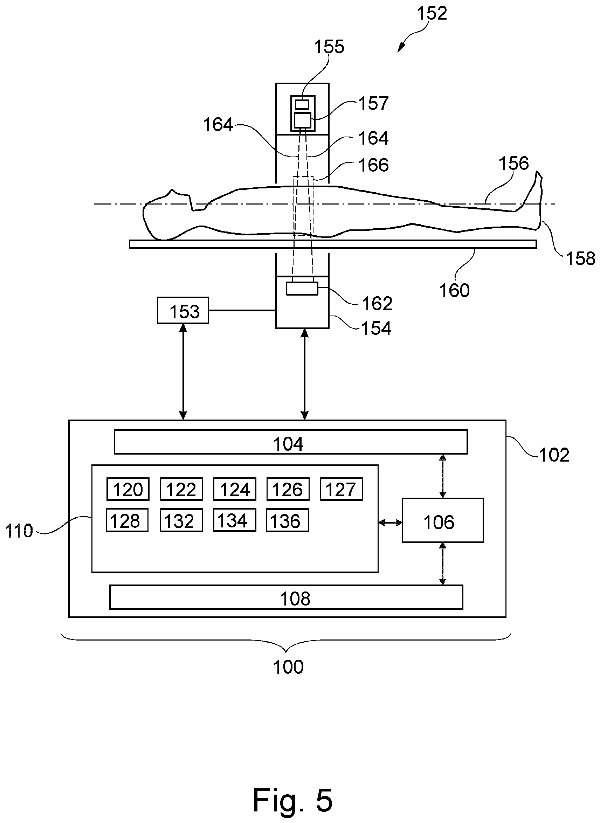

Fig. 5 illustrates a further example of a medical system 100. The medical system 100 comprises a computer 102 as shown in Fig. 1. Furthermore, the medical system 100 comprises a CT or computer tomography system 152. The CT system 152 is shown as being controlled by computer system 102. The hardware interface 104 allows the computational system 106, e.g., processor, to exchange data with and control the CT system 152. The memory 110 of the computer system 102 is shown as containing additional CT system control commands 136 for controlling the CT system 152. The CT system control commands 136 may be used by the computational system 106 to control the CT system 152 to acquire CT raw projection data 126. The memory 110 is shown as containing the CT raw projection data 126 acquired by controlling the CT system 152 with the CT system control commands 136.

The CT system 152 may comprise a rotating gantry 154. The gantry 154 rotates about an axis of rotation 156. There is a subject 158 reposing on a subject support 160. Within the gantry 154 is an X-ray tube 157, e.g., within an X-ray tube high voltage isolation tank. In addition, a voltage stabilizer circuit 155 may be provided with the X-ray tube 157, within an X-ray power supply 153 or external to both. The X-ray power supply 153 supplies the X-ray tube 157 with power.

The X-ray tube 157 produces X-rays 164 that pass through the subject 158 and are received by a detector 162. Within the area of the box 166 is an imaging zone where CT or computer tomography images 124 of the subject 158 can be made.

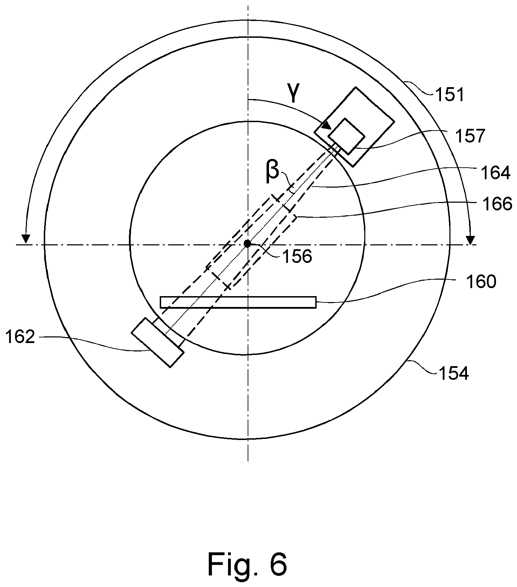

Fig. 6 illustrates an example of a gantry 154 of a CT system 152, like the CT system 152 of Fig.5. The gantry 154 rotates about an axis of rotation 156. Within the gantry 154 is an X-ray tube 157 located, which is rotated by a gantry angle γ about the axis 156, when the gantry 154 rotates. Thus, X-ray measurements of a subject reposing on a subject support 160 may be taken from different angles. These X-ray measurements may be combined using computer processing to produce, e.g., cross-sectional, i.e., tomographic, images of specific areas of the subject. The X-rays 164 may have fan geometry with a fan angle β. The fan angle quantifies the fanning out of the X-ray beams 164. For CT raw projection data acquisition, the gantry 154 may be rotated over an angular range of 180° as indicated by line 151 resulting in an angular scan range of 180° plus a fan angle β. Alternatively, the gantry 154 may be rotated over an angular range of 240°, 260°, 280° or 300°.

The gantry 154 may comprise further components not shown, like e.g. collimators, filters, and associated electronics such as gantry angulation motors, rotational components including slip ring systems.

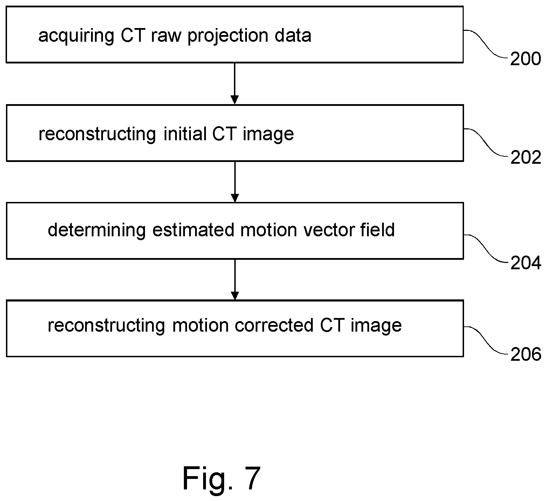

Fig. 7 shows a flow chart illustrating an exemplary method of operating the medical system of Fig. 5. In block 200, CT raw projection data is acquired using the CT system. In block 202, an initial CT image is reconstructed using the acquired CT raw projection data. In block 204, an estimated motion vector field is determined using the initial CT image as input to a machine learning framework trained to receive a CT image comprising a motion artifact as an input and in response to provide one or more estimated motion vectors of a motion causing the motion artifact as an output. For example, a regression model, like a convolutional neural network, may be used as a machine learning framework. For example, the trained machine learning framework may provide the estimated motion vector as output in response to receiving the initial CT image as input. The one or more estimated motion vectors provided as output may be used for determining the estimated motion vector field or the machine learning framework trained to may be trained to provide the estimated motion vector field itself as output. In block 206, a motion corrected CT image is reconstructed, e.g., using the CT raw projection data and the estimated motion vector field determined using the output provided by the trained machine learning framework.

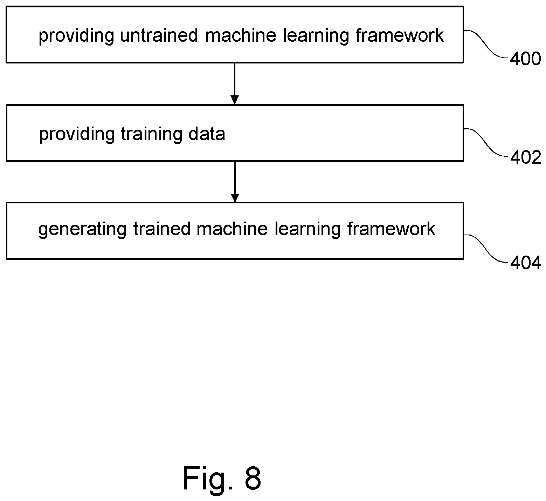

Fig. 8 shows a flow chart illustrating an exemplary method of training a machine learning framework. In block 400, an untrained machine learning framework is provided. The untrained machine learning framework may for example be a regression model, like a neural network. For example, a convolutional neural network may be used. In block 402, training data comprising a plurality of training CT images with motion artifacts may be provided. Each training CT image may be assigned with one or more training motion vectors of a motion causing the motion artifact of the respective training CT image. The training CT images may comprise clinical CT images with motion artifacts for which the training motion vector of the motion causing the motion artifact is known. Furthermore or alternatively, synthetic motion artifacts with known training motion vectors may be introduced by reconstructing training CT images using artifact free CT raw projection data and a synthetic motion vector field with one or more of the known training motion vectors. For example, the training data may further comprise training CT images without motion artifacts assigned with one or more zero training motion vectors. In block 404, the untrained machine learning framework is trained generating a trained machine learning framework. The untrained machine learning framework may be trained to receive the training CT images as a training input and to provide the one or more training motion vectors assigned to the received training CT image in response as a training output. For example, the training CT images may be assigned with a training motion vector field, e.g., comprising a training motion vector per voxel of the respective training CT image, and the untrained machine learning framework may be trained to provide the training motion vector field assigned to the received training CT image as a training output.

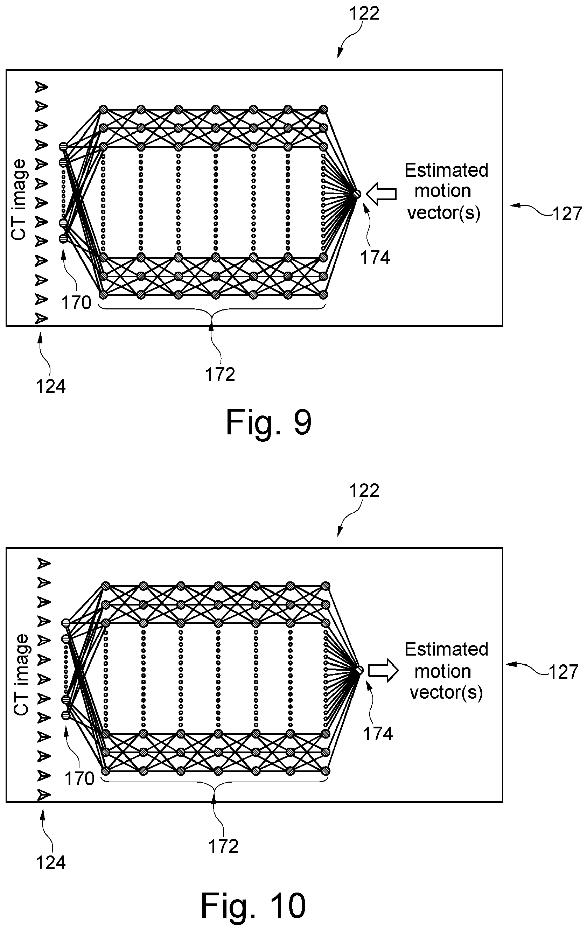

Fig. 9 shows a schematic drawing of a machine learning framework 122, which may, e.g., be implemented as in form of an artificial neural network. At an initial training stage an untrained machine learning framework 122 may be provided. In this stage selected CT images 124 comprising motion artifacts may be fed to the neural network 122 as training CT images to train the neural network 122 as well as estimates of one or more of the motion vectors of the motions causing the motion artifacts of the selected CT images 124. For example, a single motion vector may be provided per CT image. For example, a motion vector field may be provided per CT image. The respective motion vectors or motion vector fields may be determined using known motion compensation approaches and assigned to the respective clinical CT images. Alternatively, synthetic motion artifacts with known training motion vectors may introduced to motion artifact free clinical CT images in order to generate training CT images. The arrows 124 represent pixels or voxels of the selected CT images 124. These are input into an input layer 170 of the neural network 122. The input layer is then connected to intermediate layers 172, e.g., the fully connected layers. The final, e.g., fully connected layer 172, is connected to an output 174 which provides one or more estimated motion vectors 127. The number of output nodes may correspond to the number of estimated motion vectors provided as output. For example, a single node 172 may be used to provide a single estimated motion vector 127. For example, an estimated motion vector field may be provided as output comprising an estimated motion vector 127 per voxel of the CT image 124 provided as input. For example, an output layer may be used comprising the same number of nodes as the input layer 170.

In the evaluation stage the trained artificial neural network 122 is then fed a CT image, e.g., an initial CT image and the one or more estimated motion vectors are calculated by the network as an output as illustrated in Fig. 10 below.

Fig. 10 illustrates the neural network 122 in the evaluation or use phase. In this state the neural network 122 has already been trained. In use the CT images 124 are input into the input layer 170. The intermediate layers 172, e.g. fully connected layers, then take the input and in response, at the output 174, the one or more estimated motion vectors 127 are provided. In this stage the trained artificial neuronal network is used to estimate one or more motion vectors of a CT image comprising a motion artifact.

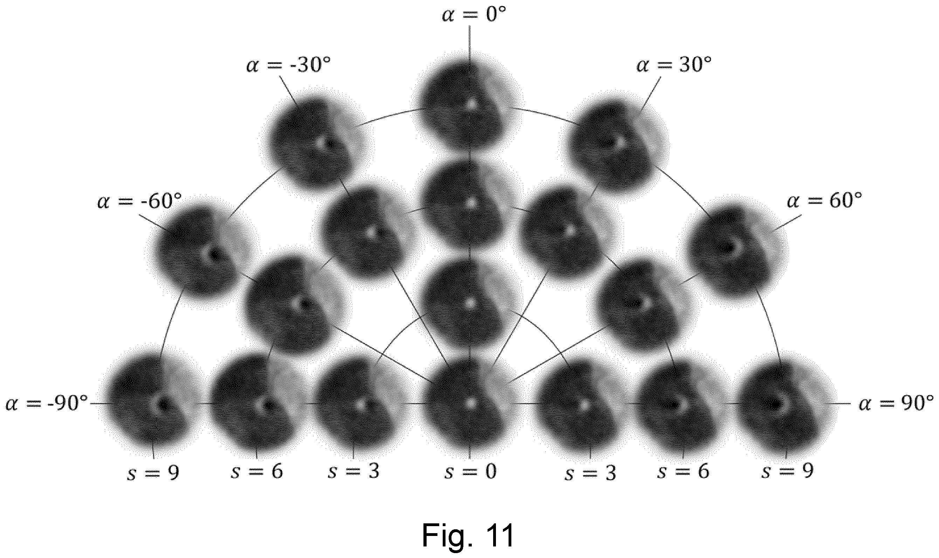

Fig. 11 illustrates an exemplary generating of training data. By introduction of synthetic motion to clinical cases with high image quality, i.e., without motion artifacts, a dictionary of CT images or CT image patches with varying motion artifacts and underlying motion vectors may be generated and used for a subsequent supervised learning. For example, the direction α of the motion vector and its strength s may be varied. For different combinations of direction and strength, CT images with synthetic motion artifacts may be generated. The angle α may, e.g., describe the angle difference between the gantry angle, e.g. mean gantry angle, and the direction of the motion vector.

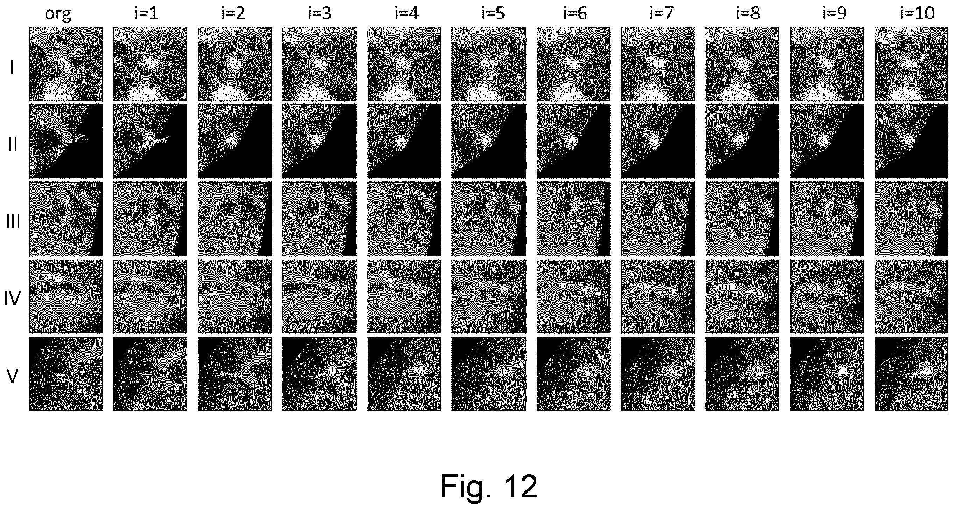

Fig. 12 illustrates an exemplary motion vector estimating and motion correcting for five initial CT images in rows I, II, III, IV, and V. The images are coronary CT angiography images. The first column shows the five initial CT images in their original form. For each of the initial CT images motion vectors are estimated and shown in the respective initial CT images. The second column shows motion corrected CT images generated using the initial CT images of the first column. For the motion corrected CT images of the second column motion vectors are estimated and shown in the respective motion corrected CT images. Columns three to eleven show motion corrected CT images after i = 2 to i = 10 iterative steps. Each of the motion corrected CT images is reconstructed using CT raw projection data and a combination of current motion vector field determined using current motion vectors and the motion vector field used for reconstructing the motion corrected CT image of the previous iterative step.

In the example shown, a plurality of sub-frameworks, e.g., five convolutional neural networks are used. For each axial coronary cross-section, motion vectors are predicted by the ensemble of five convolutional neural networks and finally averaged. The averaged motion vector is used for determining a vector field, e.g., by extrapolation and/or interpolation. Alternating motion estimation and motion compensated reconstruction in an iterative fashion, leads to gradual reduction of the coronary motion artifact levels. For example, the strength of the motion vectors degreases gradually. For each CT image a single predominant motion vector may be predicted. In case that branching vessels with different motion patterns are visible, multiple motion vectors may be estimated per CT image or CT image patch. The motion corrected CT image of the subsequent iterative step may be reconstructed using the averaged motion vectors for determining the motion vector fields.

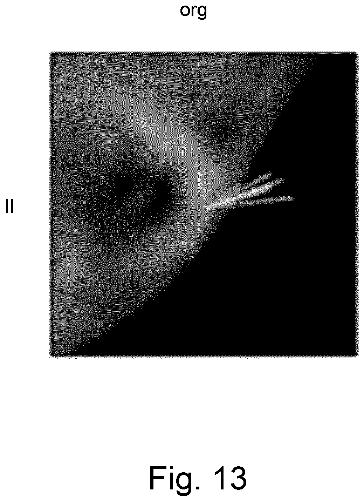

Fig. 13 shows an exemplary CT image with estimated motion vectors from Fig. 12 in more details. The CT image shown is the CT image of the first column, second row of Fig. 12. Thus, the respective CT image is an initial CT image with no motion corrections applied. An ensemble of a plurality of sub-frameworks may be used to estimate motion vectors. For example, five convolutional neural networks may be used for estimating five motion vectors which are averaged and the average motion vector may be used for a motion correction in the subsequent iterative step.

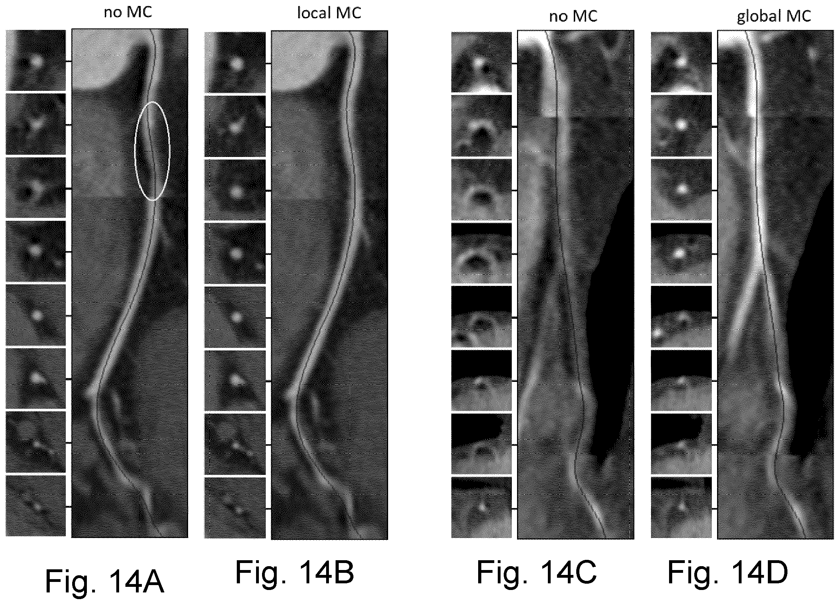

Fig. 14 show exemplary cardiac CT images before and after motion correction. Each of the Figs. 14A to 14D comprises a plurality of eight cross-sectional image patches and a multi-planar reformat. The cross-sectional image patches are used for generating the respective multi-planar reformat. Fig. 14A shows eight cross-sectional image patches and a multi-planar reformat before an application of a patch-based motion correction (MC). Fig. 14B shows the eight cross-sectional image patches and the multi-planar reformat after an application of a local motion correction (local MC). In case of a local motion correction, for each of the cross-sectional image patches one or more motion vectors are estimated using a trained machine learning framework. The one or more motion vectors of each individual cross-sectional image patch are used to determine a local motion vector field for the respective sectional image patch. The local motion vector fields are used for reconstructing the multi-planar reformat. Fig. 14C shows eight cross-sectional image patches and a multi-planar reformat before an application of a patch-based motion correction (MC). Fig. 14D shows the eight cross-sectional image patches and the multi-planar reformat after an application of a global motion correction (global MC). In case of a global motion correction, for each of the cross-sectional image patches one or more motion vectors are estimated using a trained machine learning framework. The motion vectors of the cross-sectional image patch are used to determine a global motion vector field for all of the sectional image patches. The global motion vector field is used for reconstructing the multi-planar reformat. Comparing Fig. 14A with Fig. 14B and Fig. 14C with Fig. 14D, a significant artifact reduction is observable in the multi-planar reformats and in the cross-sectional image patches. Thus, the method may allow for either global or fast local motion estimation and compensation. A significant reduction of artifact levels in coronary CT angiography images may be achieved. Beside motion compensation at the coronary arteries, the method may be extendable to arbitrary parts of the human anatomy and may enable, e.g., an organ-specific training of the motion estimation model.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### LIST OF REFERENCE NUMERALS

- 100: medical system
- 102: computer
- 104: hardware interface
- 106: computational system
- 108: user interface
- 110: memory
- 120: machine executable instructions
- 122: trained machine learning framework
- 124: initial CT images
- 126: CT raw projection data
- 127: estimated motion vector
- 128: estimated motion vector field
- 132: motion corrected CT image
- 134: training data
- 136: CT control commands
- 152: CT system
- 153: X-ray power supply
- 154: gantry
- 155: voltage stabilizer circuit
- 156: axis of rotation
- 157: X-ray tube
- 158: subject
- 160: subject support
- 162: detector
- 164: X-rays
- 166: imaging zone
- 170: input
- 172: intermediate layers
- 174: output

## Claims

1. A medical system (100) for processing computed tomography (CT) images (124, 132) comprising motion artifacts, the medical system (100) comprising:
- a memory (110) storing machine executable instructions (120) and a machine learning framework (122) trained to receive a CT image (124, 132) comprising a motion artifact as an input and to provide one or more estimated motion vectors (127, 128) of a motion causing the motion artifact in response as an output,
- a processor (106) for controlling the medical system (100), wherein execution of the machine executable instructions (120) by the processor (106) causes the processor (106) to control the medical system (100) to:
- receive an initial CT image (124) comprising an initial motion artifact and CT raw projection data (126) used for reconstructing the initial CT image (124),
- determine an estimated motion vector field (128) of the motion causing the initial motion artifact using the output of the trained machine learning framework (122) in response to receiving the initial CT image (124) as input,
- reconstruct a motion corrected CT image (132) using the CT raw projection data (126) and the estimated motion vector field (128).

2. The medical system (100) of claim 1, wherein the trained machine learning framework (122) provides the estimated motion vector field (128) as output in response to the receiving of the initial CT image (124) as input or
wherein the trained machine learning framework (122) provides one or more estimated motion vector of the estimated motion vector field (128), which are used for determining the estimated motion vector field (128).

3. The medical system (100) of any of the previous claims, wherein a motion compensated filtered back-projection is used for reconstructing the motion corrected CT image (132).

4. The medical system (100) of any of the previous claims, wherein a plurality of initial CT images (124), each comprising an initial motion artifact, and CT raw projection data (126) used for reconstructing the initial CT images (124) are received, wherein each of the initial CT images (124) of the plurality of initial CT images (124) is provided to the trained machine learning framework (122) as input, wherein the output provided by the trained machine learning framework (122) in response to each of the initial CT images (124) of the plurality of initial CT images (124) is used for the determining of the estimated motion vector field (128).

5. The medical system (100) of any of the previous claims, wherein the determining of the estimated motion vector field (128) and the reconstructing of the motion corrected CT image (132) is performed iteratively, comprising:
- determining a current estimated motion vector field (128) of a current iterative step n with n ≥ 2 using the output of the trained machine learning framework (122) in response to receiving a motion corrected CT image (132) of a preceding iterative step n-1,
- reconstructing a current motion corrected CT image (132) of the current iterative step n using the CT raw projection data (126) and a combination of the estimated motion vector field used for reconstructing the motion corrected CT image of the preceding iterative step n-1 with the current estimated motion vector field (128) of the current iterative step n.

6. The medical system (100) of claim 5, wherein the iteration is terminated, when a predefined maximum number nₘₐₓ ≥ 2 of iterative steps performed is reached or when each of the current estimated motion vectors (127) comprised by the output of the trained machine learning framework (122) subceed a predefined threshold.

7. The medical system (100) of any of the previous claims, wherein the initial CT image (124) comprising the motion artifact is a CT image of a specific organ, wherein the CT raw projection data (126) is CT raw projection data of the specific organ, wherein the trained machine learning framework (122) is trained organ specific to receive the initial CT image (124) of the specific organ comprising the motion artifact as an input and to provide one or more estimated motion vectors (127, 128) of the motion of the specific organ causing the motion artifact in response as an output, or
wherein the trained machine learning framework (122) comprises a plurality of trained sub-frameworks, wherein each of the trained sub-frameworks is trained organ specific to receive a CT image (124, 132) of a sub-framework specific organ comprising a motion artifact as an input and to provide one or more estimated motion vectors (127, 128) of a motion of the respective sub-framework specific organ causing the motion artifact in response as an output, wherein the initial CT image (124) and the CT raw projection data (126) are assigned to a specific organ, wherein a trained sub-framework of the plurality of trained sub-frameworks of the trained machine learning framework (122) is selected, wherein the selected trained sub-framework is trained for the specific organ to which the initial CT image (124) and the CT raw projection data (126) are assigned,
wherein the initial CT image (124) used as input to the trained machine learning framework (122) is received and processed by the selected trained sub-framework of the trained machine learning framework (122).

8. The medical system (100) of any of the previous claims, wherein execution of the machine executable instructions (120) further causes the processor (106) to control the medical system (100) to provide the trained machine learning framework (122) using an untrained machine learning framework, which is trained using training data (134),
wherein the training data (134) comprise a plurality of training CT images with motion artifacts, each training CT image being assigned with one or more training motion vectors of a motion causing the motion artifact of the respective training CT image, wherein the training comprises generating the trained machine learning framework (122) by training the untrained machine learning framework to receive the training CT images as a training input and to provide the one or more training motion vectors assigned to the received training CT image in response as a training output.

9. The medical system (100) of claim 8, wherein the plurality of training CT images comprises clinical CT images with motion artifacts for which the one or more training motion vectors of the motion causing the motion artifact are known and/or
wherein the plurality of training CT images comprises training CT images reconstructed using motion artifact free CT raw data and a synthetic motion vector field introducing a synthetic motion artifact with one or more known training motion vectors into the respective reconstructed training CT image.

10. The medical system (100) of any of claims 8 to 9, wherein the training is an organ specific training using training data (134) with training CT images of the respective organ for which the untrained machine learning framework or an untrained sub-framework of the untrained machine learning framework is trained.

11. The medical system (100) of any of the previous claims, further comprising a computed tomography (CT) system (152) configured for acquiring the CT raw projection data (126), wherein the receiving of the CT raw projection data (126) comprises acquiring the CT raw projection data (126) using the CT system (152), wherein the receiving of the initial CT image (124) comprises reconstructing the initial CT image (124) using the CT raw projection data (126) acquired with the CT system (152).

12. A method of operating a medical system (100) for processing computed tomography (CT) images (124, 132) comprising motion artifacts, the medical system (100) comprising:
- - a memory (110) storing machine executable instructions (120) and a machine learning framework (122) trained to receive a CT image (124, 132) comprising a motion artifact as an input and to provide one or more estimated motion vectors (127, 128) of a motion causing the motion artifact in response as an output,
- a processor (106) for controlling the medical system (100), wherein execution of the machine executable instructions (120) by the processor (106) causes the processor (106) to perform the method comprising:
- receiving an initial CT image (124) comprising an initial motion artifact and CT raw projection data (126) used for reconstructing the initial CT image (124),
- determining an estimated motion vector field (128) of the motion causing the initial motion artifact using the output of the trained machine learning framework (122) in response to receiving the initial CT image (124) as input,
- reconstructing a motion corrected CT image (132) using the CT raw projection data (126) and the estimated motion vector field (128).

13. The method of claim 12, the method further comprises providing the trained machine learning framework (122) using an untrained machine learning framework, which is trained using training data (134),
wherein the training data (134) comprise a plurality of training CT images with motion artifacts, each training CT image being assigned with one or more training motion vectors of a motion causing the motion artifact of the respective training CT image, wherein the training comprises generating the trained machine learning framework (122) by training the untrained machine learning framework to receive the training CT images as a training input and to provide one or more training motion vectors assigned to the received training CT image in response as a training output.

14. A computer program comprising machine executable instructions (120) for processing computed tomography (CT) images (124, 132) comprising motion artifacts, the machine executable instructions (120) are configured to be executed by a medical system (100) comprising a memory (110) storing a machine learning framework (122) trained to receive a CT image (124, 132) comprising a motion artifact as an input and to provide one or more estimated motion vectors (127, 128) of a motion causing the motion artifact in response as an output, the medical system (100) further comprising a processor (106) controlling the medical system (100), wherein execution of the machine executable instructions (120) by the processor (106) causes the processor (106) to control the medical system (100) to:
- receive an initial CT image (124) comprising an initial motion artifact and CT raw projection data (126) used for reconstructing the initial CT image (124),
- determine an estimated motion vector field (128) of the motion causing the initial motion artifact using the output of the trained machine learning framework (122) in response to receiving the initial CT image (124) as input,
- reconstruct a motion corrected CT image (132) using the CT raw projection data (126) and the estimated motion vector field (128).

15. Computer program of claim 14, wherein the execution of the machine executable instructions (120) further causes the processor (106) to control the medical system (100) to provide the trained machine learning framework (122) using an untrained machine learning framework, which is trained using training data (134),
wherein the training data (134) comprise a plurality of training CT images with motion artifacts, each training CT image being assigned with one or more training motion vectors of a motion causing the motion artifact of the respective training CT image, wherein the training comprises generating the trained machine learning framework (122) by training the untrained machine learning framework to receive the training CT images as a training input and to provide the one or more training motion vectors assigned to the received training CT image in response as a training output.
